# EUROPEAN PATENT APPLICATION

(11) **EP 4 621 612 A1**
(43) Date of publication of application: **24.09.2025**
(21) Application number: 25164355.7
(22) Date of filing: 18.03.2025
(51) Int. Cl.: G06F 21/10, G06F 3/12, H04L 9/40, H04L 67/30, H04L 67/53, H04L 67/50

(54) **ELECTRONIC DEVICE, METHOD OF CONTROLLING ELECTRONIC DEVICE, COMPUTER PROGRAM, AND STORAGE MEDIUM**

(30) Priority: 19.03.2024 JP 2024043597
(71) Applicant: CANON KABUSHIKI KAISHA, Tokyo 146-8501 (JP)
(72) Inventor: MIKAMI, Ruriko, Tokyo, 146-8501 (JP)
(74) Representative: TBK

(57) **Abstract**

An-electronic-device (100) includes: a-recording-control-unit configured to control a-storage-unit to record a consent-state indicating whether a user has agreed to a consent content indicating that the user consents to information transmission from the-electronic-device (100); a-display-control-unit configured to perform control that while no information indicating that a consent content requiring a consent to use of a specific function has been agreed is stored as the consent-state in the-storage-unit, a specific screen for receiving an operation indicating user agreement to the consent content is not displayed in a case where a predetermined condition is satisfied and the specific screen is displayed in a case where the predetermined condition is not satisfied; and a-control-unit configured to perform control to execute the specific function in a case where the predetermined condition is satisfied even when no information indicating that the consent content has been agreed is stored as the consent-state in the-storage-unit.

## Description

### BACKGROUND OF THE INVENTION

### Field

The present disclosure relates to an electronic device, a method of controlling the electronic device, a computer program, and a storage medium.

### Description of the Related Art

A system has been known that transmits status information of an electronic device to a server based on user agreement and provides service in accordance with the state of the electronic device by analyzing the status information on the server side.

Japanese Patent Laid-Open No. 2020-019238 discloses a system that obtains agreement for a consent to information transmission from a user of a complex machine and transmits status information to a server for use in service.

### SUMMARY

However, according to Japanese Patent Laid-Open No. 2020-019238, the user is sometimes requested to perform a consent operation even in a case where no consent is required, which has been caused inconvenience to the user.

The present invention in its first aspect provides an electronic device as specified in claims 1 to 12.

The present invention in its second aspect provides a storage medium storing a program causing a computer of an electronic device as specified in claim 13.

The present invention in its third aspect provides a program causing a computer of an electronic device as specified in claim 14.

The present invention in its fourth aspect provides a control method of an electronic device as specified in claims 15 and 16.

Further features of the present invention will become apparent from the following description of exemplary embodiments with reference to the attached drawings.

### BRIEF DESCRIPTION OF THE DRAWINGS

Fig. 1 is a configuration diagram of a system;
Figs. 2A and 2B are block diagrams of an electronic device and an external instrument;
Fig. 3 is a diagram illustrating model information of an image processing apparatus;
Fig. 4 is a diagram indicating, for each model kind, whether a user consent is required when information of the image processing apparatus is transmitted to a server;
Fig. 5 is a diagram illustrating management information of a group of applications provided by the image processing apparatus;
Fig. 6 is a diagram illustrating consent kinds and consent states of the image processing apparatus;
Fig. 7 is a diagram illustrating screen transition in consent agreement receiving processing of the image processing apparatus;
Fig. 8 is a flowchart illustrating an application control method for the image processing apparatus;
Fig. 9 is a flowchart illustrating the application control method for the image processing apparatus; and
Fig. 10 is a flowchart illustrating the application control method for the image processing apparatus.

### DESCRIPTION OF THE EMBODIMENTS

An embodiment of the present disclosure will be described below with reference to the accompanying drawings. Relative disposition of constituent components of an apparatus, the apparatus shape, and the like, which are used in the present embodiment are merely exemplary and the present invention is not limited thereto. In the accompanying drawings, identical or similar components are denoted by the same reference number, and duplicate description is omitted.

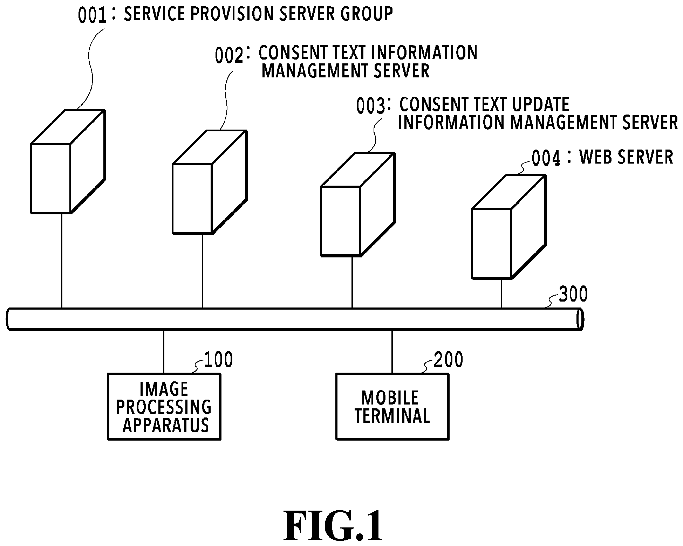

Fig. 1 is a configuration diagram illustrating the entire configuration of a system according to the present embodiment. This information processing system of the present embodiment includes a service provision server group 001, a consent text information management server 002, a consent text update information management server 003, a WEB server 004, an image processing apparatus 100, and a mobile terminal 200. The components are connected to each other through a communication network 300 to perform communication therebetween.

The service provision server group 001 is a server for providing services of the image processing apparatus 100 in cooperation with clouds. Cloud services include services such as printing of image data on a cloud at the image processing apparatus 100 and storing of image data scanned by the image processing apparatus 100 on a cloud.

The consent text information management server 002 manages the latest consent version of a consent text. The latest consent version is updated in a case where a consent text requiring user agreement is changed due to, for example, function additional or legal amendments.

The consent text update information management server 003 manages a transmissible consent version, which is a consent version necessary for performing information transmission, separately for each country. In addition, the consent text update information management server 003 determines the installation country of the image processing apparatus 100 and returns the transmissible consent version of a consent in accordance with the country. Transmissible consent version information in the server is updated in a case where a consent text requiring user agreement is changed due to, for example, function additional or legal amendments.

The WEB server 004 stores the latest consent text for each region.

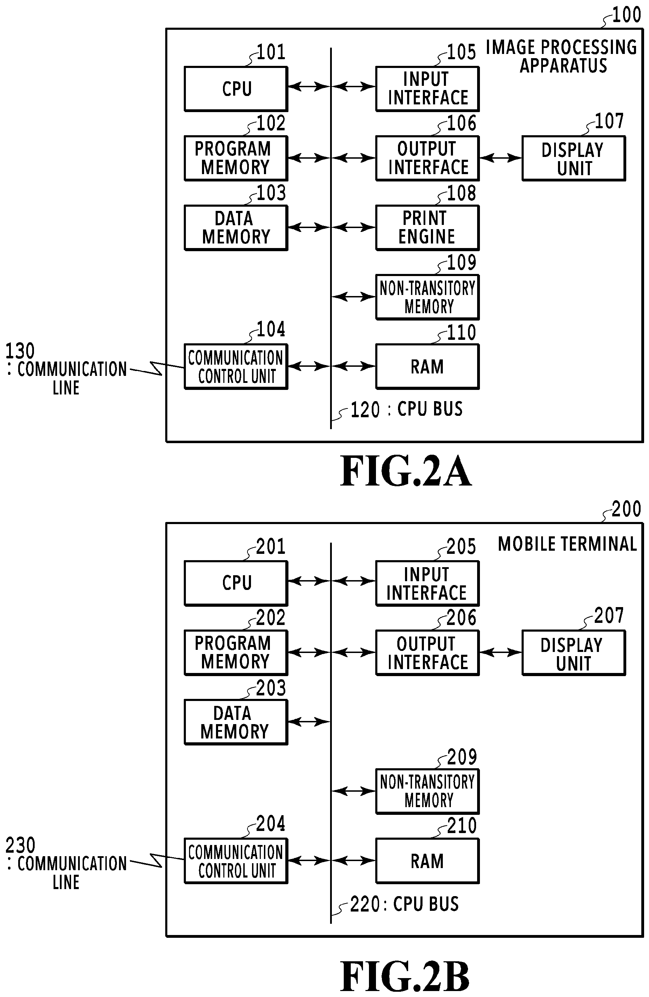

Figs. 2A and 2B are block diagrams of an electronic device and an external instrument. Fig. 2A is a diagram illustrating the configuration of the image processing apparatus 100 in the present embodiment. The image processing apparatus 100 is an electronic device. The image processing apparatus 100 includes a CPU 101, a program memory 102, a data memory 103, a communication control unit 104, an input interface 105, an output interface 106, a display unit 107, a print engine 108, a non-transitory memory 109, and a RAM 110.

The CPU 101 is a system control unit and controls the entire image processing apparatus 100. The program memory 102 stores a control program executed by the CPU 101, an embedded operating system program, and the like. The data memory 103 stores program control variables and the like and includes various work buffer regions used during processing at the print engine 108.

The communication control unit 104 controls data communication with the outside through a communication line 130. The input interface 105 is an interface for receiving data input and operation instructions from a user and constituted by a physical keyboard, buttons, a touch panel, and the like. The output interface 106 and the input interface 105 to be described later may be an integrated component, and screen output and operation reception from the user may be performed by the integrated component. The output interface 106 is an interface that performs control for the display unit 107 to perform data display and notification of the state of the image processing apparatus 100.

The display unit 107 is constituted by a light-emitting diode (LED), a liquid crystal display (LCD), or the like and performs data display and notification of the state of the image processing apparatus 100. A software keyboard equipped with keys such as numerical value input keys, mode setting keys, a determination key, a cancel key, and a power key may be installed on the display unit 107 to receive input from the user through the display unit 107. The print engine 108 forms an image on a printing media such as paper by using a printing material such as ink based on information stored in the data memory 103 and a received printing job and outputs a printing result.

The non-transitory memory 109 is constituted by a device such as an electrically erasable programmable read-only memory (EEPROM) or a flash memory. The non-transitory memory 109 is used mainly to store data such as setting values of the image processing apparatus 100, which needs to be held even when no power is supplied to the image processing apparatus 100. The RAM 110 is constituted by, for example, a dynamic random access memory (DRAM), which needs a backup power source. The RAM 110 is used as a main memory and a work memory of the CPU 101 and stores reception buffers for temporarily storing printing information received from a PC or the like, and various kinds of information. The above-described constituent components 101 to 106 and 108 to 110 are mutually connected through a CPU bus 120 managed by the CPU 101.

The image processing apparatus 100 can perform communication with the servers 001 to 004 and the mobile terminal 200 through the communication network 300. The image processing apparatus 100 obtains a consent text, consent versions associated with the consent text, the like through communication with the servers 001 to 004 and holds them in the non-transitory memory 109.

Fig. 2B is a diagram illustrating the configuration of the mobile terminal 200 in the present embodiment. The mobile terminal 200 includes a CPU 201, a program memory 202, a data memory 203, a communication control unit 204, an input interface 205, an output interface 206, a display unit 207, a non-transitory memory 209, and a RAM 210.

The CPU 101 is a system control unit and controls the entire mobile terminal 200. The program memory 202 stores a control program executed by the CPU 201, an embedded operating system program, and the like. The data memory 203 stores program control variables and the like and includes various work buffer regions.

The communication control unit 204 controls data communication with the outside through a communication line 230. The input interface 205 is an interface for receiving data input and operation instructions from the user and constituted by a physical keyboard, buttons, a touch panel, and the like. The output interface 206 and the input interface 205 to be described later may be an integrated component, and screen output and operation reception from the user may be performed by the integrated component. The output interface 206 is an interface that performs control for the display unit 207 to perform data display and notification of the state of the mobile terminal 200.

The display unit 207 is constituted by a light-emitting diode (LED), a liquid crystal display (LCD), or the like and performs data display and notification of the state of the mobile terminal 200. A software keyboard equipped with keys such as numerical value input keys, mode setting keys, a determination key, a cancel key, and a power key may be installed on the display unit 207 to receive input from the user through the display unit 207. The non-transitory memory 209 is constituted by a device such as an electrically erasable programmable read-only memory (EEPROM) or a flash memory. The non-transitory memory 209 is used mainly to store data such as setting values of the mobile terminal 200, which needs to be held even when no power is supplied to the mobile terminal 200.

The RAM 210 is constituted by, for example, a dynamic random access memory (DRAM), which needs a backup power source. The RAM 210 is used as a main memory and a work memory of the CPU 201 and stores transmission buffers for temporarily storing information to be transmitted to the mobile terminal 200, and various kinds of information. The above-described constituent components 201 to 206 and 209 to 210 are mutually connected through a CPU bus 220 managed by the CPU 101.

The mobile terminal 200 can perform communication with the servers 001 to 004 and the image processing apparatus 100 through the communication network 300. The mobile terminal 200 obtains a consent text, a consent version associated with the consent text, and the like through communication with the servers 001 to 004 and holds them in the non-transitory memory 209.

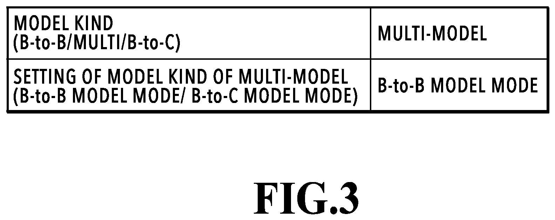

Fig. 3 is a diagram illustrating the model kind (model type information) of the image processing apparatus 100 in the present embodiment. Fig. 3 is also a setting value related to the sales form of the image processing apparatus 100.

The image processing apparatus 100 has three model kinds of a B-to-B model, a B-to-C model, and a multi-model for respective sales forms, and the image processing apparatus 100 is any of them.

The B-to-B model is a model that is designed for office use and in which a price per printed sheet is set and charges are calculated in accordance with the number of printed sheet and monthly billed. A maintenance contract under which a service technician visits and performs repairs when trouble occurs to the image processing apparatus 100 of the B-to-B model is established between the user of the image processing apparatus 100 of the B-to-B model and the vendor of the B-to-B model. Then, the image processing apparatus 100 of the B-to-B model is provided to the user. Thus, the status of the image processing apparatus 100 of the B-to-B model or the number of printed sheet needs to be periodically transmitted to a server connected through a network. A consent for transmitting information indicating the status of the image processing apparatus 100 or the number of printed sheet from the image processing apparatus 100 to the server is typically obtained in writing or the like from a company as the user when the vendor sells the image processing apparatus.

The B-to-C model is a sales model that is designed for home use and in which and in which the user buys consumables. Thus, the user can use printing function without transmitting the status of the image processing apparatus of the B-to-C model and the number of printed sheet to a server. When the user uses a function (such as Web service) that can be used by transmitting information to a server, it is necessary that a consent to information transmission to the server is obtained (an operation indicating agreement to the consent content is received) by the image processing apparatus 100.

The multi-model is a model in which switching is possible between a B-to-B model mode and a B-to-C model mode. Typically, setting of whether the B-to-B model mode or the B-to-C model mode is performed before the image processing apparatus 100 is sold, and which model the image processing apparatus 100 functions can be set in accordance with the sales form. Setting of the switching is performed by setting a service mode in which the image processing apparatus 100 can be operated by a service technician. The service mode is a mode that cannot be operated by general users but can be operated in a case where authentication as a service technician is successful based on inputting of an authentication key or the like. In the service mode, it is possible to set whether to cause the multi-model to function in the B-to-B model mode (in other words, function as the B-to-B model) or function in the B-to-C model mode (in other words, function as the B-to-C model).

In the image processing apparatus 100, model kind information illustrated in Fig. 3 is input and recorded at factory shipment. In a factory of the image processing apparatus 100, one value of the B-to-B model, the multi-model, or the B-to-C model is input through the display unit 107, and the CPU 101 stores the input value in the non-transitory memory 109. Fig. 3 indicates that the multi-model is set as the model kind of the image processing apparatus 100 of the present embodiment.

In the image processing apparatus 100 of the multi-model, the model mode of the multi-model is input by a service technician in the service mode and recorded (in other words, set). In a case where the model kind is the multi-model, a service technician inputs the value of the B-to-B model mode or the B-to-C model mode through the display unit 107 when selling. The CPU 101 sets the model kind by storing the value input to the non-transitory memory 109. As illustrated in Fig. 3, the B-to-B model mode is set in the image processing apparatus 100 of the present embodiment.

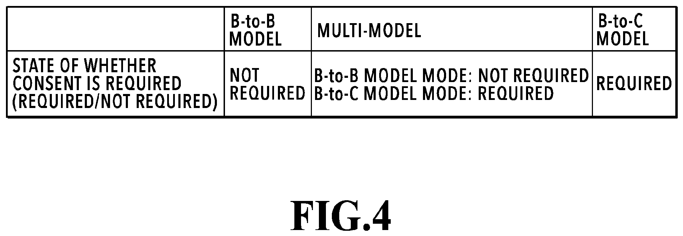

Fig. 4 is a diagram indicating, for each model kind, whether a user consent is required when information of the image processing apparatus 100 in the present embodiment is transmitted to a server. In other words, Fig. 4 is a diagram indicating whether a user consent is required for each model kind (B to B, B to C, or multi-model) indicated in Fig. 3.

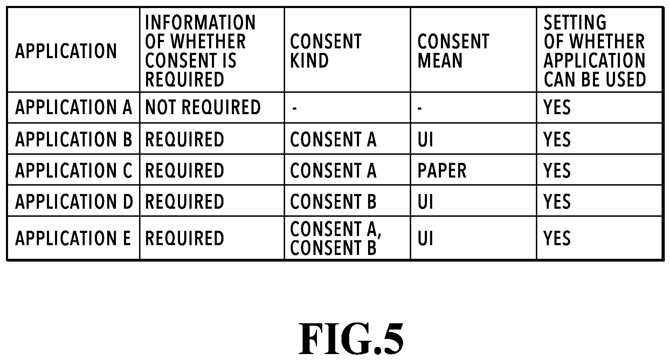

In the B-to-B model, since a user consent is already obtained at selling as described above, no consent is required when the user uses a function that can be used by transmitting information to a server. However, in a case where no consent is obtained, the administrator of the image processing apparatus 100 changes setting of whether an application can be used (Fig. 5 to be described later) to "not allowed" instead of obtaining a consent from the user.

In the B-to-C model, since no user consent is obtained at selling, a consent needs to be obtained when the user uses a function that can be used by transmitting information to a server.

In the multi-model, whether a consent is required is determined in accordance with the current setting of the model kind. Information indicating whether a consent is required, which is illustrated in Fig. 4, is held in the non-transitory memory 109.

Fig. 5 is a diagram illustrating management information of a group of applications provided by the image processing apparatus 100 in the present embodiment. Applications A to E illustrated in Fig. 5 are application software programs for providing services in cooperation with the service provision server group 001. Examples of services performed in cooperation with the service provision server group 001 include services (functions) with which image data on a cloud is printed by the image processing apparatus 100 and image data scanned by the image processing apparatus 100 is stored on a cloud.

For each application, the image processing apparatus 100 holds, in the non-transitory memory 109, information of whether a consent is required, the kind of a consent (kind of the consent content), a consent unit (method of receiving agreement to the consent content), and setting of whether the application can be used.

The information of whether a consent is required is information indicating whether a consent text needs to be agreed when the user uses the application.

The kind of a consent indicates the kind of a consent text that needs to be agreed when the user uses the application. For example, it is indicated that the user needs to agree two of consent A (consent text A) and consent B (consent text B) when using application E. In the present embodiment, consent A is a consent to transmission of information necessary for providing a service (specific function). Consent B is a consent to transmission of information not essential for service provision, which is to be used in user analysis by a service provider. These consents are each associated with a consent text managed by the consent text information management server 002 and the latest consent version.

The consent unit has two kinds of "UI" and "paper". The kind "UI" is a method of displaying a reception screen for an operation to agree a consent text on the display unit 107 of the image processing apparatus 100 or an external instrument that can perform communication with the image processing apparatus 100 and obtaining a consent (agreement to the consent text) when the user performs an operation indicating whether to agree the consent text.

The kind "paper" is a method in which a contract procedure is needed for the user and a service provider to use a target service (for example, service of application C), and as part of the contract, the user agrees a consent content. No use contract of the service is established in a case where the user does not agree the consent content. Methods of the contract procedure include a method in which the user fills a contract paper. Agreement to the consent content is obtained by filling the contract paper to establish the contract. A service for which a service use contract is established between the user and the service provider by an electronic document, instead of a paper document, on a medium (for example, electronic device such as a personal computer) different from the image processing apparatus 100 is treated as equivalent to paper in this context. For example, a method of storing reception of agreement (approval) to a consent text as part of a service use contract through a workflow system is treated as equivalent to a method of obtaining a consent with paper in the present embodiment.

When the user agrees a consent text, the administrator of the service provision server group 001 or a management system registers the serial number of the image processing apparatus 100 (device-specific identification information of the image processing apparatus) of the user having agreed to the service provision server group 001. By verifying the serial number, the service provision server group 001 provides a service to the image processing apparatus 100 for which it can be checked that agreement to the consent text is already received.

The setting of whether the application can be used has two settings of "allowed" and "not allowed". The user can use the application in a case of "allowed", and the user cannot use the application in a case of "not allowed". Its initial value is "allowed", and the setting can be changed by the administrator of the image processing apparatus 100. For example, the administrator sets "not allowed" to restrict use of an application that cooperates with the service provision server group 001. Examples of applications that cooperate with the service provision server group 001 include an application that stores scanned professional-use image data on a cloud. The information illustrated in Fig. 5 is held in the non-transitory memory 109.

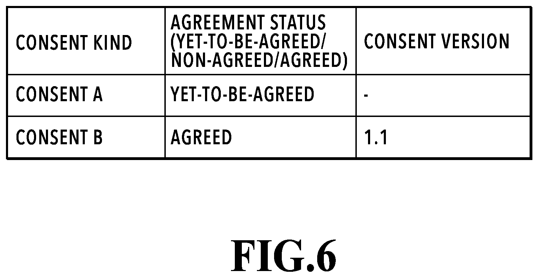

Fig. 6 is a diagram illustrating the record state of the agreement status of the image processing apparatus 100 in the present embodiment for each consent kind. The record state is controlled and recorded by the CPU 101 and held in the non-transitory memory 109. The CPU 101 records the agreement status of consent A or consent B as a consent kind. The non-transitory memory 109 holds an agreement state and a consent version (version of a consent text corresponding to the agreement state) for each consent kind. A agreement state stores a value corresponding to one of three states of yet-to-be-agreed (yet-to-be-consented), non-agreed (non-consented), and agreed (consented). For example, in Fig. 6, the agreement state (consent status) of consent B is "agreed". The consent version of consent B is "1.1".

The agreement state "agreed" is a state in which an operation indicating that the user agrees a consent text managed by the consent text information management server 002 is received, and the consent version of the consent text when the agreement operation is received (agreement is obtained) is recorded in association. The agreement state "non-agreed" is a state in which an operation indicating that the user does not agree a consent text managed by the consent text information management server 002 is received.

The agreement state "yet-to-be-agreed" is a state in which a consent text is agreed nor not agreed. The agreement state "yet-to-be-agreed" is an initial value set at factory shipment of the image processing apparatus 100.

In addition to the three states, a value indicating a state "re-agreement required" may be stored. The state "re-agreement required (re-consent required)" is a state in which a consent text requiring user agreement has been changed due to legal amendments or the like and the user's intent to agree needs to be reconfirmed. The CPU 101 periodically performs communication with the consent text update information management server 003 and obtains the transmissible consent version of each consent kind. Then, the agreement state is set to "re-agreement required" in a case where the transmissible consent version is greater than a consent version in Fig. 6.

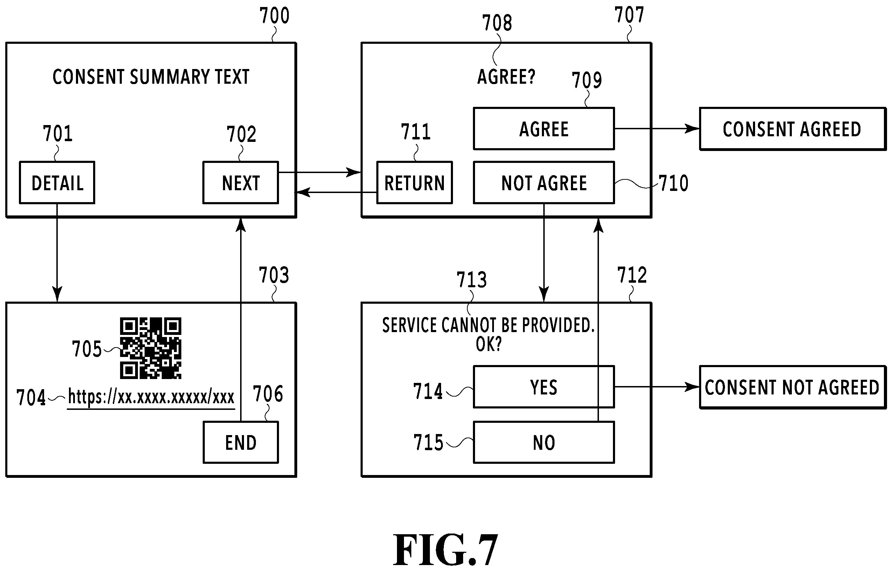

Fig. 7 is a diagram illustrating screen transition in consent agreement receiving processing of the image processing apparatus 100 in the present embodiment. A screen indicating the agreement receiving processing is controlled and displayed by the CPU 101. A screen 700 is a screen that displays a consent summary text.

The CPU 101 reads the summary text of a consent currently subjected to the agreement receiving processing from the non-transitory memory 109 and displays the summary text on the display unit 107. When having sensed press (touch) of a "Detail" button 701 through the input interface 105, the CPU 101 displays a screen 703. When having sensed press of a "Next" button 702, the CPU 101 displays a screen 707.

The screen 703 is a screen that displays a URL for accessing to a detailed consent text. The CPU 101 obtains a URL for accessing to the WEB server 004 from the consent text information management server 002 through the communication control unit 104. Then, the display unit 107 displays a string 704 of the URL and a two-dimensional code 705 including information of the URL. When having sensed press of an "End" button 706 through the input interface 105, the CPU 101 displays the screen 700.

The screen 707 is a screen (agreement reception screen) for performing agreement reception. The CPU 101 reads a text 708 of "Agree ?" from the non-transitory memory 109 and displays the text on the display unit 107. When having sensed press of an "Agree" button 709 through the input interface 105, the CPU 101 records information indicating agreement as the agreement status of a consent text (consent type) currently subjected to the agreement receiving processing. Then, the CPU 101 obtains the consent version from the consent text information management server 002 through the communication control unit 104 and records the consent version as the illustrated consent version (Fig. 6).

When having sensed press of a "Not agree" button 710 on the screen 707 through the input interface 105, the CPU 101 displays a screen 712. When having sensed press of a "Return" button 711, the CPU 101 displays the screen 700.

The screen 712 is a non-agreement check screen. The CPU 101 reads, from the non-transitory memory 109, a text 713 indicating that no service can be provided due to non-agreement, and displays the text on the display unit 107. When having sensed press of a "Yes" button 714 on the screen 712 through the input interface 105, the CPU 101 records "non-agreed" as the agreement status of a consent text (consent type) currently subjected to the agreement receiving processing. When having sensed press of a "No" button 715 on the screen 703, the CPU 101 displays the screen 707.

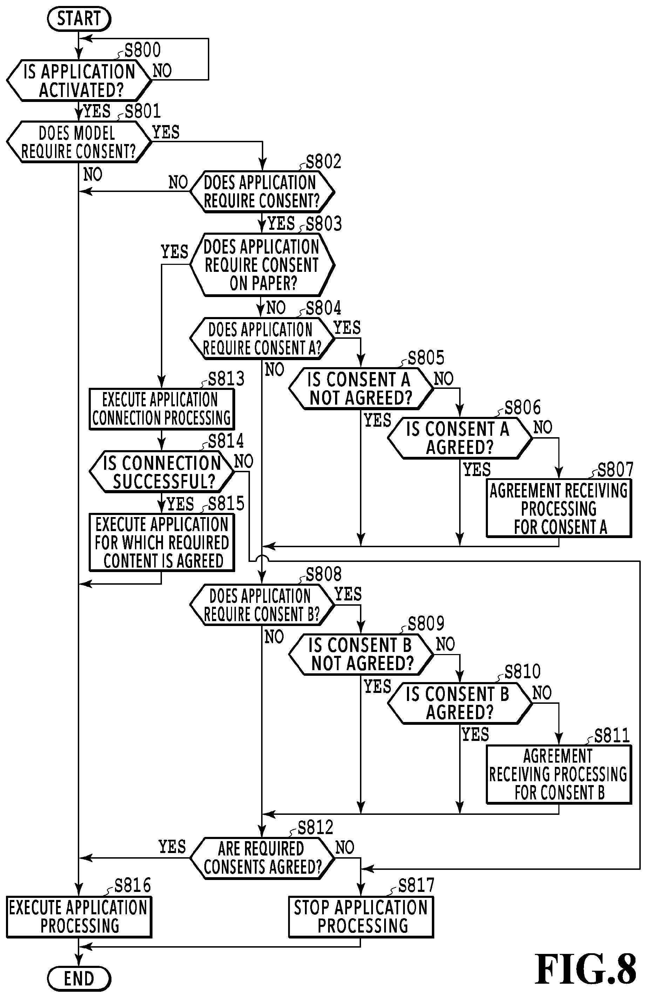

Fig. 8 is a flowchart of processing related to consent agreement reception in the image processing apparatus 100 in the present embodiment. Each process of the flowchart is implemented by the CPU 101 loading a computer program stored in the program memory 102 onto the RAM 110 and executing the computer program. The present flowchart starts when any of a plurality of applications is activated by the CPU 101.

At S800, the CPU 101 determines whether activation of any of a plurality of application software programs (hereinafter simply referred to as applications) is instructed (an operation for executing functions of the application is performed). In a case of having determined that activation is instructed, the CPU 101 proceeds to S801. Otherwise, the CPU 101 proceeds to S801 waits for instruction to activate any of the applications at S800.

At S801, the CPU 101 determines whether the image processing apparatus 100 is a model that requires a consent. In the present processing, the CPU 101 first obtains a model kind applied to the image processing apparatus 100 from model information of the non-transitory memory 109 illustrated in Fig. 3. Any of the B-to-B model, the multi-model, and the B-to-C model is obtained. In a case where the obtained value is the multi-model, a setting value (the B-to-B model mode or the B-to-C model mode in Fig. 3) of the model kind of the multi-model is obtained. In the present embodiment, the B-to-B model mode or the B-to-C model mode is obtained.

Then, the CPU 101 obtains either "consent required" or "consent not required" by verifying the obtained value with information of whether a consent is required for each model kind, which is illustrated in Fig. 4. Specifically, the CPU 101 determines the B-to-C model, for which a consent is required, or the multi-model in the B-to-C model mode. In a case of having determined the B-to-C model or the multi-model in the B-to-C model mode, the CPU 101 proceeds to S802. Otherwise, in other words, in a case of the B-to-B model or the multi-model in the B-to-B model mode, the CPU 101 proceeds to S816. In particular, in a case where the model kind of the image processing apparatus 100 is the multi-model, processing changes depending on whether the B-to-C model mode or the B-to-B model mode is set. In a case where the model kind is the B-to-C model mode, processing for receiving agreement to a consent text is sometimes performed in processing at S802 and later. In a case where the model kind is the B-to-B model mode, the CPU 101 proceeds to S816 without performing processing (such as display of the agreement reception screen) for receiving agreement to a consent text, thereby executing processing of an activated application and executing functions of the activated application.

At S802, the CPU 101 refers to application group management information in the non-transitory memory 109 illustrated in Fig. 5 and determines whether the activated application is an application that requires a consent. In a case of having determined that a consent is not required, the CPU 101 proceeds to S816. In a case of having determined that a consent is required, the CPU 101 proceeds to S803.

At S803, the CPU 101 refers to the application group management information in the non-transitory memory 109 illustrated in Fig. 5 and determines whether the activated application is an application that requires a consent on paper. In a case of having determined the activated application is an application that requires a consent on paper, the CPU 101 proceeds to S813. Otherwise, in other words, in a case of having determined the activated application is an application that obtains a consent through a UI of the image processing apparatus 100, the CPU 101 proceeds to S804. In a case where the activated application is an application that obtains a consent on paper, processing (such as display of the agreement reception screen) for receiving agreement to a consent text through the UI is not performed. In this manner, it is possible to avoid inconsistency with an agreement status already obtained separately through paper or the like, and it is also possible to prevent increase in the number of operations due to unnecessary agreement operations from the user.

At S804, the CPU 101 refers to the application group management information in the non-transitory memory 109 illustrated in Fig. 5 and determines whether agreement to consent A is required for the activated application. In a case of having determined that agreement to consent A is required, the CPU 101 proceeds to S805. In a case of having determined that agreement to consent A is not required, the CPU 101 proceeds to S808.

At S805, the CPU 101 refers to a consent state (agreement status) related to consent A and stored in the non-transitory memory 109 illustrated in Fig. 6 and determines whether "non-agreed" is stored. In a case of having determined that "non-agreed" is stored (non-agreement is already determined) for consent A, the CPU 101 proceeds to S808. In a case of having determined that "non-agreed" is not stored for consent A (non-agreement is not determined yet), the CPU 101 proceeds to S806. In a case where consent A is not agreed, it can be interpreted that an operation indicating non-agreement to consent A is performed by the user in the past, and thus the agreement receiving processing related to consent A at S807 is not performed again. Thus, the CPU 101 proceeds to S808 in a case of having determined "YES" at S805. In a case where the version of the stored agreement status of consent A is older than the latest consent text (latest consent text to be agreed) stored in the consent text update information management server 003, the same treatment as in the case of "yet-to-be-agreed" is performed irrespective of the agreement status and the process proceeds to S807. In a case where "re-agreement required" is stored as the agreement status of consent A, as well, the process proceeds to S807.

At S806, the CPU 101 refers to the consent state (agreement status) related to consent A and stored in the non-transitory memory 109 illustrated in Fig. 6 and determines whether "agreed" is stored. In a case of having determined that "agreed" is stored (agreement is already determined) for consent A, the CPU 101 proceeds to S808. In a case of having determined that consent A is not agreed (is yet to be agreed or needs to be re-agreed), the CPU 101 proceeds to S807.

For example, consider a case where application B that requires agreement to consent A is activated in the image processing apparatus 100 in the past and an operation to agree consent A has been performed but consent B is yet to be agreed. In this case, when application E that requires agreement to both consent A and consent B is activated in the image processing apparatus 100, the CPU 101 determines "YES" at S806 and does not perform the agreement receiving processing for consent A at S807. Then, only consent receiving processing (S811) for consent B is performed in processing at S808 and later. In this manner, it is possible to omit the number of unnecessary operations that the user again agrees a consent type to which agreement is already obtained, thereby reducing the number of operations. In a case of applications of the same consent kind, upon acquisition of consent agreement when one of the applications is activated, it is possible to use the other application without displaying the agreement reception screen for the consent content when the application is activated.

At S807, the CPU 101 displays the agreement reception screen for consent A and performs agreement receiving processing related to consent A. The agreement receiving processing is processing described above by using the screen transition diagram illustrated in Fig. 7. The CPU 101 first displays the screen 700 as a consent reception screen related to consent A in Fig. 7 and performs the processing described above with reference to Fig. 7 in accordance with an operation from the user. In a case where the "Agree" button 709 is pressed by the user, the CPU 101 records "agreed" as the consent state of consent A in the non-transitory memory illustrated in Fig. 6 and records a consent version associated with a consent text as its consent version. In a case where the "Not agree" button 710 is pressed by the user, the CPU 101 records "non-agreed" as the consent state of consent A illustrated in Fig. 6.

At S808, the CPU 101 refers to the application group management information in the non-transitory memory 109 illustrated in Fig. 5 and determines whether agreement to consent B is required for the activated application. In a case of having determined that agreement to consent B is required, the CPU 101 proceeds to S809. In a case of having determined that agreement to consent B is not required, the CPU 101 proceeds to S812.

At S809, the CPU 101 refers to a consent state (agreement status) related to consent B and stored in the non-transitory memory 109 illustrated in Fig. 6 and determines whether "non-agreed" is stored. In a case of having determined that "non-agreed" is stored for consent B, the CPU 101 proceeds to S812. In a case of having determined that "non-agreed" is not stored for consent B, the CPU 101 proceeds to S810. In a case where consent B is not agreed, an operation indicating non-agreement to consent B is performed by the user in the past, and thus the agreement receiving processing related to consent B at S811 is not performed again. In a case where the version of the stored agreement status of consent B is older than the latest consent text (latest consent text to be agreed) stored in the consent text update information management server 003, the same treatment as in the case of "yet-to-be-agreed" is performed irrespective of the agreement status and the process proceeds to S811. In a case where "re-agreement required" is stored as the agreement status of consent B, as well, the process proceeds to S811.

At S810, the CPU 101 refers to the consent state (agreement status) related to consent B and stored in the non-transitory memory 109 illustrated in Fig. 6 and determines whether "agreed" is stored. In a case of having determined that "agreed" is stored for consent B, the CPU 101 proceeds to S812. In a case of having determined that consent B is not agreed (in other words, is yet to be agreed or needs to be re-agreed), the CPU 101 proceeds to S811.

At S811, the CPU 101 displays the agreement reception screen for consent B and performs agreement receiving processing related to consent B. The agreement receiving processing is processing described above by using the screen transition diagram illustrated in Fig. 7. The CPU 101 first displays the screen 700 as a consent reception screen related to consent B in Fig. 7 and performs the processing described above with reference to Fig. 7 in accordance with an operation from the user. In a case where the "Agree" button 709 is pressed by the user, the CPU 101 records "agreed" as the consent state of consent B illustrated in Fig. 6 and records a consent version associated with a consent text as its consent version. In a case where the "Not agree" button 710 is pressed by the user, the CPU 101 records "non-agreed" as the consent state of consent B illustrated in Fig. 6.

At S812, the CPU 101 refers to the application group management information in the non-transitory memory 109 (Fig. 5) and the consent state (Fig. 6) and determines whether all consent kinds required by the activated application are agreed. In a case of having determined that "agreed" is stored for the agreement statuses of all kinds of required consent texts, the CPU 101 proceeds to S817. Otherwise, in other words, in a case of having determined that "yet-to-be-agreed", "non-agreed", or "re-agreement required" is stored for the agreement status of any one of the kinds of required consent texts, the CPU 101 proceeds to S817.

At S813, the CPU 101 transmits the serial number (identification information of the image processing apparatus 100) to the service provision server group 001. In a case where the user has a contract on paper, the administrator of a service provider registers the serial number of the image processing apparatus 100 to the service provision server group 001. A CPU of the service provision server group 001 verifies whether the received serial number is registered. Then, in a case where the received serial number is registered, the CPU of the service provision server group 001 transmits information indicating that connection is successful to the image processing apparatus 100. In a case where the received serial number is not registered, the CPU transmits information of connection error to the image processing apparatus 100. This processing is executed without performing processing at S805 to S807. Specifically, in a case where execution of a function related to a service contracted on paper is instructed (operation to instruct activation of application C), connection to an external system that provides the service is attempted even when no information indicating agreement to a consent content required for the service is stored in the non-transitory memory 109. Then, control to execute the service (function of the application) is performed in a case where the connection is established. Furthermore, no consent reception screen for the consent content required for execution of application C is displayed based on the occurrence of an operation to instruct activation of application C. The above-described processing makes it possible to eliminate redundant work for the user in a service contracted on paper (service for which a service use contract is established between the service provider and the user by a medium different from the image processing apparatus 100).

At S814, the CPU 101 determines whether a connection result received from the service provision server group 001 is "connection is successful". In a case of having determined that "connection is successful", the CPU 101 proceeds to S815. In a case of having determined that connection is not successful (the connection result indicates connection error), the CPU 101 proceeds to S817. Successful connection means that a contract on paper is established.

At S815, the CPU 101 refers to the application group management information in the non-transitory memory 109 (Fig. 5) and the consent state (Fig. 6). Then, the CPU 101 records "agreed" as the consent state of a consent kind required by a currently controlled application. In addition, as its consent version, a consent version from the consent text information management server 002 is obtained and its value is recorded.

For example, consent A is required as a consent kind for application C, the consent kind of which is paper. Successful connection to the service provision server group 001 indicates that consent A is agreed by the user on paper. Thus, the consent state of consent A in the consent state illustrated in Fig. 6 can be changed from "yet-to-be-consented" to "agreed".

At S816, the CPU 101 executes processing of the activated application, in other words, a function of the activated application. For example, the CPU 101 performs processing that executes functions of the activated application with which image data on a cloud is printed by the image processing apparatus 100 in cooperation with the service provision server group 001 and image data scanned by the image processing apparatus 100 is stored on a cloud. Thereafter, the CPU 101 ends the processing of the present flowchart.

At S817, the CPU 101 stops processing of the currently controlled application and ends the processing of the present flowchart. In this case, no function of the activated application is executed. Accordingly, the CPU 101 performs control that information transmission is not performed for an application for which necessary agreement is not obtained.

In the above description of the present embodiment, the processing of Fig. 8 is performed by the image processing apparatus 100, but the mobile terminal 200 may perform the consent agreement receiving processing and transmit a consent state to the image processing apparatus 100 through the communication control unit 204. In this case, the image processing apparatus 100 may record the consent state received from the mobile terminal 200 through the communication control unit 104 as the consent state (Fig. 6) in the non-transitory memory 109.

As described above, according to the present embodiment, it is possible to reduce user's inconvenience related to consent operations. Specifically, in a case where a predetermined condition is satisfied (the model kind of the image processing apparatus 100 is the B-to-B model or the multi-model in the B-to-B model mode), control is performed as if consent is obtained, without performing the consent agreement receiving processing. Thus, it is possible to execute functions while minimizing the number of operations without requiring unnecessary agreement operations from the user. Moreover, it is possible to prevent inconsistency from occurring to an existing contract such as a maintenance contract at selling, for example, when the user on a required consent text wrongly performs a non-agreement operation despite functioning as the B-to-B model.

In a case of an application that obtains a consent on paper, the CPU 101 records "agreed" as the consent state when having determined that a consent is obtained based on successful connection to the service provision server group 001. By sharing the consent states of consent A and consent B between applications, control not to perform the consent agreement receiving processing is performed in a case where the consent states are "agreed". Through the above-described control, it is possible to reduce the consent agreement receiving processing in a case where no consent is required, and an effect of reducing inconvenience to the user can be expected.

### Other embodiments

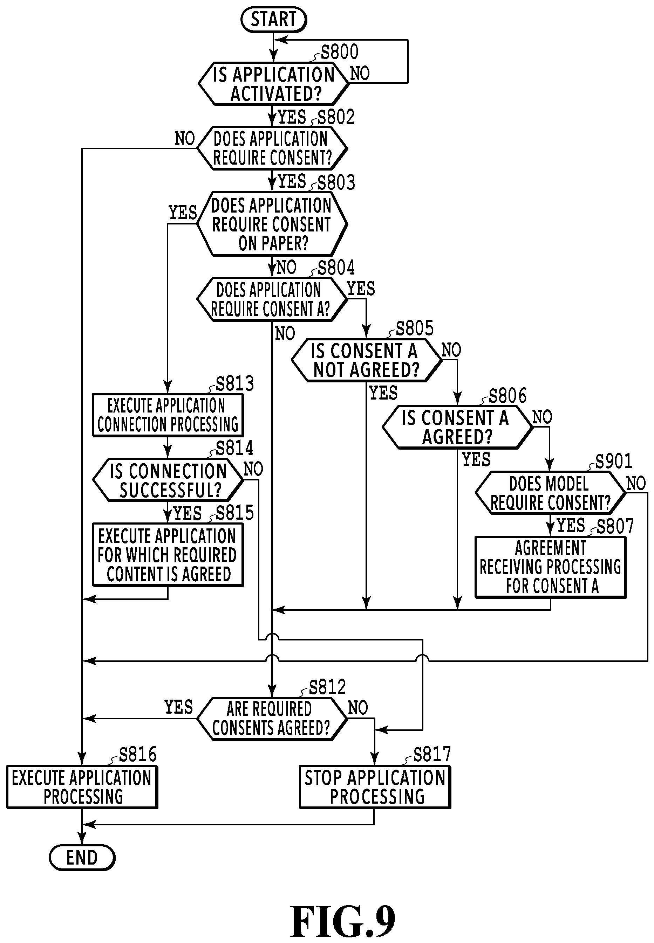

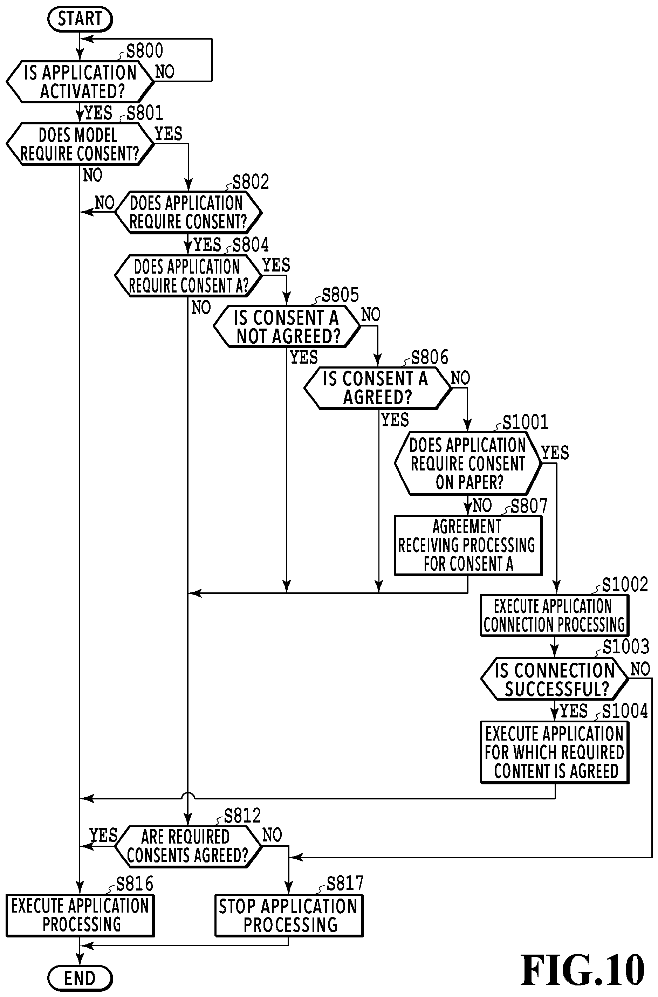

Although there are two consent kinds in the above-described embodiment, the present invention is not limited thereto in reality. The number of consent kinds may be one or three or more. Although the flowchart of Fig. 8 includes a plurality of processes of determining whether a specific function can be used, the determination processes may be performed in interchanged orders as appropriate. For example, the process of determining the model of the image processing apparatus 100 may be performed after the process of determining whether a required consent is already agreed. For example, the process of determining whether a consent on paper is required may be performed after the process of determining whether a required consent is already agreed. Based on the above description, the following describes an example in which the number of consent kinds is one and the determination order is different from that in Fig. 8, with reference to Figs. 9 and 10.

Fig. 9 is a flowchart illustrating the application control method for the image processing apparatus. Specifically, the same processing as in the flowchart illustrated in Fig. 8 is performed, but the order of the "process of determining whether a model requires a consent" is different from that in Fig. 8, and processing in a case where the number of consent kinds is one for consent A is illustrated.

Processing at S800 to S817 is the same as processing illustrated in Fig. 8, and thus description thereof is omitted.

At S806, the CPU 101 refers to the consent state (agreement status) related to consent A and stored in the non-transitory memory 109 illustrated in Fig. 6 and determines whether "agreed" is stored. In a case of having determined that "agreed" is stored for consent A, the CPU 101 proceeds to S812. In a case of having determined that consent A is not agreed (in other words, is yet to be agreed or needs to be re-agreed), the CPU 101 proceeds to S901.

At S901, the CPU 101 obtains a model kind applied to the image processing apparatus 100 from the model information in the non-transitory memory 109 illustrated in Fig. 3. Any of the B-to-B model, the multi-model, and the B-to-C model is obtained. In a case where the obtained value is the multi-model, a setting value (the B-to-B model mode or the B-to-C model mode in Fig. 3) of the model kind of the multi-model is obtained. In the present embodiment, the B-to-B model mode or the B-to-C model mode is obtained.

Then, either "consent required" or "consent not required" is obtained by verifying the obtained value with information of whether a consent is required for each model, which is illustrated in Fig. 4. Specifically, the CPU 101 determines the B-to-C model, for which a consent is required, or the multi-model in the B-to-C model mode. In a case of having determined the B-to-C model or the multi-model in the B-to-C model mode, the CPU 101 proceeds to S807. Otherwise, in other words, in a case of the B-to-B model or the multi-model in the B-to-B model mode, the CPU 101 proceeds to S816.

Fig. 10 is a flowchart illustrating the application control method for the image processing apparatus. Specifically, the same processing as in the flowchart illustrated in Fig. 8 is performed, but the order of the "process of determining whether the application requires a consent on paper" is different from that in Fig. 8, and processing in a case where the number of consent kinds is one for consent A is illustrated.

Processing at S800 to S817 is the same as processing illustrated in Fig. 8, and thus description thereof is omitted.

At S806, the CPU 101 refers to the consent state (agreement status) related to consent A and stored in the non-transitory memory 109 illustrated in Fig. 6 and determines whether "agreed" is stored. In a case of having determined that "agreed" is stored for consent A, the CPU 101 proceeds to S812. In a case of having determined that consent A is not agreed (in other words, is yet to be agreed or needs to be re-agreed), the CPU 101 proceeds to S1001.

At S1001, the CPU 101 refers to the application group management information in the non-transitory memory 109 illustrated in Fig. 5 and determines whether a consent unit for the activated application corresponds to an application that obtains a consent on paper. In a case of having determined that the activated application is an application that obtains a consent on paper, the CPU 101 proceeds to S1002. In a case of having determined that the activated application is not an application that obtains a consent on paper, the CPU 101 proceeds to S807. In a case where the activated application is an application that obtains a consent on paper, processing (such as display of the agreement reception screen) for receiving agreement to a consent text through the UI is not performed. In this manner, it is possible to avoid inconsistency with an agreement status already obtained separately through paper or the like, and it is also possible to prevent increase in the number of operations due to unnecessary agreement operations from the user.

At S1002, the CPU 101 transmits the serial number (identification information of the image processing apparatus 100) to the service provision server group 001. In a case where the user has a contract on paper, the administrator of a service provider registers the serial number of the image processing apparatus 100 to the service provision server group 001. The CPU of the service provision server group 001 verifies whether the received serial number is registered. Then, in a case where the received serial number is registered, the CPU transmits information indicating that connection is successful to the image processing apparatus 100. In a case where the received serial number is not registered, the CPU transmits connection error to the image processing apparatus 100. As illustrated in Fig. 10, this processing is executed without performing processing at S807. Specifically, in a case where execution of a function related to a service contracted on paper is instructed, connection to an external system that provides the service is attempted even when no information indicating agreement to a consent content required for the service is stored in the non-transitory memory 109. Then, control to execute the service (function of the application) is performed in a case where the connection is established. Furthermore, no consent reception screen for the consent content required for execution of application C is displayed based on the occurrence of an operation to instruct activation of application C.

At S1003, the CPU 101 determines whether a connection result received from the service provision server group 001 is "connection is successful". In a case of having determined that "connection is successful", the CPU 101 proceeds to S1004. In a case of having determined that connection is not successful (the connection result indicates connection error), the CPU 101 proceeds to S817. Successful connection means that a contract on paper is established.

At S1004, the CPU 101 refers to the application group management information in the non-transitory memory 109 (Fig. 5) and the consent state (Fig. 6). Then, the CPU 101 records "agreed" as the consent state of a consent kind required by a currently controlled application. In addition, as its consent version, a consent version from the consent text information management server 002 is obtained and its value is recorded.

For example, consent A is required as a consent kind for application C, the consent kind of which is paper. Successful connection to the service provision server group 001 indicates that consent A is agreed by the user on paper. Thus, the consent state of consent A in the consent state illustrated in Fig. 6 can be changed from "yet-to-be-consented" to "agreed".

Although the cases where the order of determination processes is different are described above, the present invention is not limited thereto and the order of processes may be changed as appropriate.

The various kinds of control performed by the image processing apparatus 100 in the above description may be performed by one hardware component, or control of the entire apparatus may be performed by distributing processing to a plurality of hardware components (for example, a plurality of processors or circuits).

Although the present disclosure is described above in detail based on preferable embodiments, the present disclosure is not limited to these specific embodiments, and the present invention also includes various forms without departing from the scope of the disclosure. Moreover, each above-described embodiment merely indicates an embodiment of the present disclosure, and the embodiments may be combined as appropriate.

Although the above description of the embodiment is made with an example in which the present disclosure is applied to the image processing apparatus, the present invention is not limited thereto but is also applicable to a printer apparatus, an information processing apparatus, or a cellular phone terminal, each including a display.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)"), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electronic device (100) comprising:
a recording control unit configured to control a storage unit to record a consent state indicating whether a user has agreed to a consent content indicating that the user consents to information transmission from the electronic device (100);
a display control unit configured to perform control that while no information indicating that a consent content requiring a consent to use of a specific function has been agreed is stored as the consent state in the storage unit, a specific screen for receiving an operation indicating user agreement to the consent content is not displayed in a case where a predetermined condition is satisfied and the specific screen is displayed in a case where the predetermined condition is not satisfied; and
a control unit configured to perform control to execute the specific function in a case where the predetermined condition is satisfied even when no information indicating that the consent content has been agreed is stored as the consent state in the storage unit.

2. The electronic device according to claim 1, wherein the control unit performs control to restrict execution of the specific function in a case where no information indicating that the consent content has been agreed is stored as the consent state in the storage unit and the predetermined condition is not satisfied.

3. The electronic device according to claim 2, wherein control is performed to execute the specific function even in a case where the predetermined condition is not satisfied while information indicating that the consent content has been agreed is stored as the consent state in the storage unit.

4. The electronic device according to any one of claims 1 to 3, wherein the predetermined condition includes information indicating the type of the electronic device corresponds to a specific type.

5. The electronic device according to claim 4, wherein the specific type is a type that the electronic device is sold in a sales form accompanied by a maintenance contract.

6. The electronic device according to claim any one of claims 1 to 5, wherein the predetermined condition includes a condition related to a setting value related to a sales form of the electronic device.

7. The electronic device according to claim 6, wherein the predetermined condition is satisfied in a case where a setting value related to a sales form of the electronic device is a setting value indicating a first sales form accompanied by a maintenance contract.

8. The electronic device according to claim 6 or claim 7, wherein the predetermined condition is not satisfied in a case where the setting value related to a sales form of the electronic device corresponds to a second sales form not accompanied by a maintenance contract.

9. The electronic device according to any one of claims 6 to 8, wherein the predetermined condition is satisfied in a case where the type of the electronic device is a type that supports a plurality of sales forms including a first sales form accompanied by a maintenance contract and a second sales form not accompanied by the maintenance contract and a setting value related to a sales form of the electronic device is a setting value indicating the first sales form.

10. The electronic device according to any one of claims 1 to 9, wherein the electronic device is capable of executing at least one of printing and scanning.

11. An electronic device (100) comprising:
a recording control unit configured to control a storage unit to record a consent state indicating whether a user has agreed to a consent content indicating that the user consents to information transmission from the electronic device (100); and
a control unit configured to
perform control that in a case where no information indicating that a consent content requiring a consent to use of a first function involving information transmission to an external system has been agreed is stored as the consent state stored in the storage unit, a specific screen for receiving an operation indicating user agreement to the consent content is displayed based on occurrence of a first operation for using the first function, and use of the first function is restricted in a case where no operation indicating agreement is performed on the specific screen, and
perform control that in a case where no information indicating that the consent content requiring a consent to use of a second function involving information transmission to an external system has been agreed is stored as the consent state stored in the storage unit, communication with the external system is performed to use the second function without displaying the specific screen despite a second operation for using the second function.

12. The electronic device according to claim 11, wherein the second function is a function for which a use contract related to the second function is established between a service provider that provides the second function and a user through a procedure using a medium other than the electronic device.

13. A computer-readable storage medium storing a program for causing at least one computer to function as each of the units of the electronic device (100) according to any one of claims 1 to 12.

14. A program for causing a computer to function as the electronic device (100) according to any one of claims 1 to 12.

15. A method of controlling an electronic device (100), the method comprising:
a record control step of controlling a storage unit to record a consent state indicating whether a user has agreed to a consent content indicating that the user consents to information transmission from the electronic device (100);
a display control step of performing control that while no information indicating that a consent content requiring a consent to use of a specific function has been agreed is stored as the consent state in the storage unit, a specific screen for receiving an operation indicating user agreement to the consent content is not displayed in a case where a predetermined condition is satisfied and the specific screen is displayed in a case where the predetermined condition is not satisfied; and
a control step of performing control to execute the specific function in a case where the predetermined condition is satisfied even when no information indicating that the consent content has been agreed is stored as the consent state in the storage unit.

16. A method of controlling an electronic device (100), the method comprising:
a record control step of controlling a storage unit to record a consent state indicating whether a user has agreed to a consent content indicating that the user consents to information transmission from the electronic device (100); and
a control step of
performing control that in a case where no information indicating that a consent content requiring a consent to use of a first function involving information transmission to an external system has been agreed is stored as the consent state stored in the storage unit, a specific screen for receiving an operation indicating user agreement to the consent content is displayed based on occurrence of a first operation for using the first function, and use of the first function is restricted in a case where no operation indicating agreement is performed on the specific screen, and
performing control that in a case where no information indicating that the consent content requiring a consent to use of a second function involving information transmission to an external system has been agreed is stored as the consent state stored in the storage unit, communication with the external system is performed to use the second function without displaying the specific screen despite a second operation for using the second function.
